(19) Europäisches Patentamt

European Patent Office

Office européen des brevets

(11) **EP 1 538 567 A2**

(12) **EUROPEAN PATENT APPLICATION**

(43) Date of publication:
**08.06.2005 Bulletin 2005/23**

(51) Int Cl.⁷: **G06T 9/00**

(21) Application number: **04257401.2**

(22) Date of filing: **30.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **01.12.2003 US 525827 P**
**24.12.2003 US 532179 P**
**19.01.2004 KR 2004003983**

(71) Applicant: **Samsung Electronics Co., Ltd.**
**Suwon-si, Gyeonggi-do (KR)**

(72) Inventor: **Han, Woo-jin**
**#108-703 Jugong 2-danji Apt.**
**Yeongtong-gu, Suwon-si, Gyeonggi-do (KR)**

(74) Representative: **Waddington, Richard et al**
**Appleyard Lees,**
**15 Clare Road**
**Halifax HX1 2HY (GB)**

(54) **Method and apparatus for scalable video encoding and decoding**

(57)    Disclosed is a scalable video coding algorithm. A method for video coding includes temporally filtering frames in the same sequence to a decoding sequence thereof to remove temporal redundancy, obtaining and quantizing transformation coefficients from frames whose temporal redundancy is removed, and generating bitstreams. A video encoder comprises a temporal transformation unit (10), a spatial transformation unit (20), a quantization unit (30) and a bitstream generation unit (40) to perform the method. A method for video decoding is basically reverse in sequence to the video coding. A video decoder extracts information necessary for video decoding by interpreting the received bitstream and decoding it. Thus, video streams may be generated by allowing a decoder to decode the generated bitstreams, while maintaining the temporal scalability on an encoder-side.

FIG. 12

EP 1 538 567 A2

**EP 1 538 567 A2**

## Description

The present invention relates generally to video compression, and more particularly, to a video coding algorithm in which the temporal filtering sequence in an encoding process is inversed in a decoding process.

Development of information communication technologies including the Internet has led to an increase in video communication, as well as text and sound communication. However, consumers have not been satisfied with existing text-based communication schemes. To satisfy the consumers, multimedia data containing a variety of information including text, picture, music and the like has been increasingly provided. Multimedia data is usually voluminous such that it requires a storage medium having large capacity. Also, a wide bandwidth is required for transmitting the multimedia data. For example, a picture of 24 bit true color having a resolution of 640x480 needs the capacity of 640x480x24 per frame, namely, data of approximately 7.37 Mbits. In this respect, a bandwidth of approximately 1200 Gbits is needed so as to transmit this data at 30 frames/second, and a storage space of approximately 1200 Gbits is needed so as to store a movie having a length of 90 minutes. Taking this into consideration, it is necessary to use a compressed coding scheme in transmitting multimedia data including text, picture or sound.

A basic principle of data compression is to eliminate redundancy between the data. The data redundancy implies three types of redundancies: spatial redundancy, temporal redundancy, and perceptual-visual redundancy. Spatial redundancy refers to duplication of identical colors or objects in an image, temporal redundancy refers to no or little variation between adjacent frames in a moving picture frame or successive repetition of same sounds in audio, and perceptual-visual redundancy refers to dullness of human's vision and sensation to high frequencies. By eliminating these redundancies, data can be compressed. Types of data compression can be divided into loss/lossless compression depending upon whether source data is lost, intra-frame/inter-frame compression depending upon whether data is compressed independently relative to each frame, and symmetrical/asymmetrical compression, depending upon whether compression and restoration of data require the same period of time. In addition, when a total end-to-end delay time in compression and decompression does not exceed 50 ms, this is referred to as real-time compression. When frames have a variety of resolutions, this is referred to as scalable compression. Lossless compression is mainly used in compressing text data or medical data, and loss compression is mainly used in compressing multimedia data. On the other hand, intra-frame compression is generally used in eliminating spatial redundancy and inter-frame compression is used in eliminating temporal redundancy.

Respective transmission media to transmit multimedia data have different capacities by medium. Transmission media in current use have a variety of transmission speeds, covering an ultra high-speed communication network capable of transmitting data of tens Mbits per second, a mobile communication network having the transmission speed of 384 kbits per second, and so on. In conventional video coding algorithms, e.g., MPEG-1, MPEG-2, H.263 or H.264, temporal redundancy is eliminated by motion compensation based on a motion compensated prediction coding scheme and a spatial redundancy is eliminated by a transformation coding scheme. These schemes have good performance in compression but they have little flexibility for a true scalable bit-stream because main algorithms of the schemes employ recursive approaches. For this reason, recent research has been focused on wavelet-based scalable video coding. Scalable video coding refers to video coding having scalability, the property which enables parts of a bit-stream compressed to be decoded. Because of this property, various videos can be attained from a bit-stream. The term "scalability" herein is used to collectively refer to spatial scalability available for controlling video resolution, signal-to-noise ratio (SNR) scalability available for controlling video quality and temporal scalability available for controlling frame rates of video, and combinations thereof.

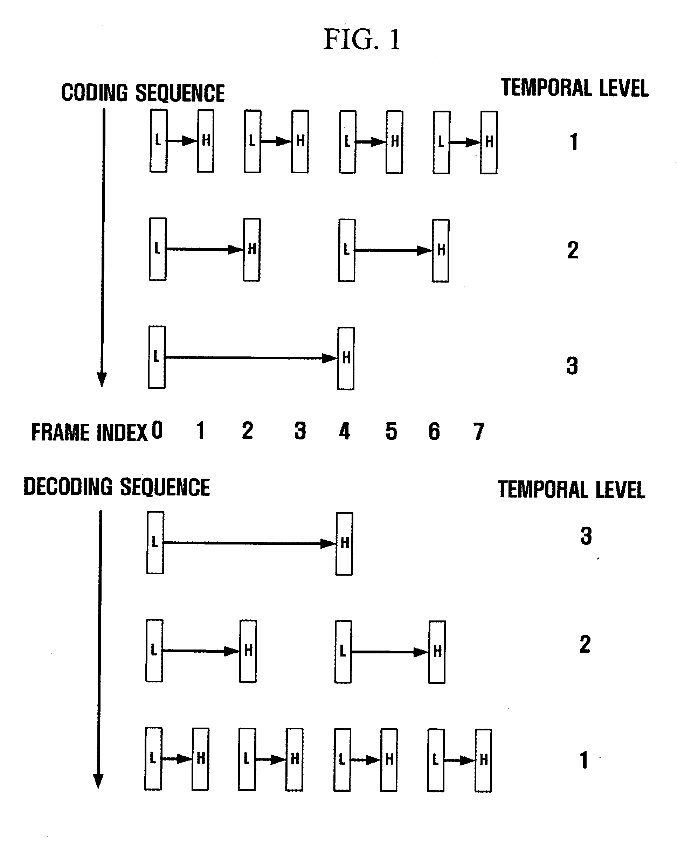

Among numerous techniques used in a wavelet-based scalable video coding scheme, motion compensated temporal filtering (MCTF) proposed by Ohm (J. R. Ohm, "Three-dimensional subband coding with motion compensation," IEEE Trans. Image Proc., Vol. 3, No. 5, Sept. 1994) and improved by Choi and Wood (S. J. Choi and J. W. Woods, "Motion compensated 3-D subband coding of video," IEEE Trans. Image Proc., Vol. 8, No. 2, Feb. 1999) is a core technique to eliminate temporal redundancy and perform scalable video coding with temporal flexibility. In MCTF, the coding operation is performed on a Group of Pictures (GOP) basis, and pairs of a current frame and a reference frame are temporally filtered in the direction of motion. This technique will be described in more detail with reference to FIG. 1.

FIG. 1 illustrates temporal decompositions in scalable video coding and decoding processes employing an MCTF scheme.

In FIG. 1, an L frame indicates a low frequency or average frame and an H frame indicates a high frequency or difference frame. As illustrated therein, to perform the coding process, frame pairs at the lowest temporal level are first temporally filtered, to thereby transform the frames at the low temporal level into L frames and H frames at a higher temporal level, and pairs of the transformed L frames are again temporally filtered and transformed into frames at the higher temporal levels.

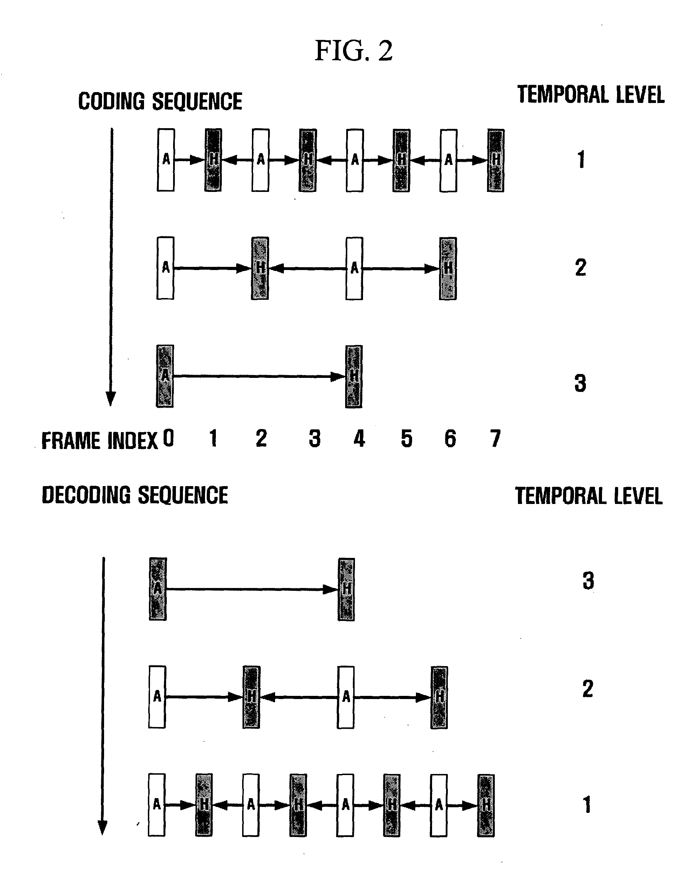

An encoder generates a bit-stream by use of an L frame at the highest level and H frames, which has passed through wavelet transformation. An encoding sequence operates from the frames at a lower level to those at a higher level. A decoder restores frames by operating darker-colored frames obtained through inverse wavelet transformation in the order of frames at the higher level to those at the lower level. Two L frames at a second temporal level are restored by use of an L frame and an H frame at a third temporal level, and four L frames at a first temporal level are restored by use of two L frames and two H frames at the second temporal level. Finally, eight frames are restored by use of four L frames and four H frames at the first temporal level. The video coding employing the original MCTF scheme has temporally flexible scalability, but it may have some disadvantages such as poor performance in uni-directional motion estimation and low quality at low temporal rates and so on. There have been a number of research endeavors to improve these disadvantages. One of them is unconstrained MCTF (UMCTF) proposed by Turaga and Mihaela (D. S. Turaga and Mihaela van der Schaar, "Unconstrained motion compensated temporal filtering," ISO/IEC JTC1/SC29/WG11, MPEG03/M8388, 2002). UMCTF will be described with reference to FIG. 2.

FIG. 2 illustrates temporal decompositions in scalable video coding and decoding processes employing a UMCTF scheme.

In the UMCTF scheme, a plurality of reference frames and bi-directional filtering are available for use, thereby providing more general frameworks. In addition, non-dyadic temporal filtering may be possible in the UMCTF scheme by using the proper insertion of an unfiltered frame (A frame). Instead of filtered L frames, the use of A frames improves the visual quality at lower temporal levels since the visual quality of L frames degrades severely sometimes due to the lack of accurate motion estimation. In past research, many experimental results have shown that UMCTF without an update-step has better performance than original MCTF. For this reason, the specific form of UMCTF, which has no update-step, is generally used although the most general form of UMCTF allows an adaptive choice of low-pass filters.

The decoder-side can restore a video sequence having flexible temporal scalability with a video stream compressed by use of an MCTF (or UMCTF)-based scalable video coding algorithm. For example, the decoder-side in FIG. 1 (or FIG. 2) can restore a video stream having 1/8 frame rate when L (or A) frames of the temporal level 3 are only decoded, it can restore a video stream having 1/4 frame rate until L (or A) frames of the temporal level 2 are only decoded, it can restore a video stream having 1/2 frame rate until L (or A) frames of the temporal level 1 are only decoded, and it can store a video stream having the original frame rate when H frames of the temporal level 1 are all restored to L (or A) frames through inverse-temporal filtering.

However, when a video is compressed by use of a conventional MCTF (or UMCTF)-based scalable video coding algorithm, the encoder-side has no flexible temporal scalability. Referring to FIG. 1 (or FIG. 2), since temporal filtering has been performed from the frames at a lower temporal level to those at a higher temporal level by the encoder-side in the conventional scheme, the encoder can have no temporal scalability. This is because other frames are restored based on L (or A) frames at the highest temporal level (temporal level 3) when inverse-temporal filtering is performed in a decoding process to allow the decoder-side to restore a video sequence. The frame at the highest temporal level can only be obtained after passing through the whole encoding process in the conventional schemes, and thus, the encoder-side cannot suspend temporal filtering because of operation capability or other reasons.

For this reason, there is a need for a video coding algorithm allowing the encoder-side to have temporal scalability.

Accordingly, the present invention has been conceived to satisfy the need described above. The present invention provides a video coding and decoding method and apparatus wherein an encoder-side has temporal scalability.

According to the present invention there is provided an apparatus and method as set forth in the appended claims. Preferred features of the invention will be apparent from the dependent claims, and the description which follows.

According to an aspect of the present invention, there is provided a method for video coding, the method comprising (a) receiving a plurality of frames constituting a video sequence and eliminating a temporal redundancy between frames on a GOP basis, starting from the frame at the highest temporal level sequentially, and (b) generating a bit-stream by quantizing transformation coefficients obtained from the frames whose temporal redundancy has been eliminated.

With respect to the frames at the same temporal level in step (a), the temporal redundancy thereof may be eliminated from the frame having the least index (the frame having the soonest temporality) to the frame having the highest index (the frame having the latest temporality).

Among the frames constituting the GOP, the frame at the highest temporal level may be a frame having the least frame index in the GOP.

In step (a), the first frame at the highest temporal level may be set to "A" frame when a temporal redundancy between frames constituting a GOP is eliminated, the temporal redundancy between the frames of the GOP other than the "A" frame at the highest temporal level may be eliminated in the sequence from the highest to lowest temporal level, and the temporal redundancy may be eliminated in the sequence from the lowest to highest frame index when they are at the same temporal level, where one or more frames which can be referenced by each frame in the course of eliminating the temporal redundancy have a higher frame index among the frames at the higher or same temporal levels.

One frame may be added to frames referenced by each frame in the course of eliminating temporal redundancy.

One or more frames at a higher temporal level belonging to the next GOP may be added to frames referenced by each frame in the course of eliminating the temporal redundancy.

The method may further comprise elimination of spatial redundancy between the plurality of frames, wherein the generated bit-stream further comprises information on the sequence of spatial redundancy elimination and temporal redundancy elimination (redundancy elimination sequence).

According to another aspect of the present invention, there is provided a video encoder comprising a temporal transformation unit receiving a plurality of frames and eliminating a temporal redundancy of the frames in the sequence of the highest to lowest temporal level, a quantization unit quantizing transformation coefficients obtained after eliminating the temporal redundancy between the frames, and a bit-stream generation unit generating a bit-stream by use of the quantized transformation coefficients.

The temporal transformation unit may comprise a motion estimation unit obtaining motion vectors from the received plural frames, and a temporal filtering unit performing temporal filtering relative to the received plural frames on a GOP basis by use of the motion vectors, the temporal filtering unit performing the temporal filtering on a GOP basis in the sequence of the highest to lowest temporal level or of the lowest to highest frame index at the same temporal level, and by referencing the original frames of the frames having already been temporally filtered.

The temporal filtering unit may further comprise each frame in process of the temporal filtering among reference frames referenced when eliminating a temporal redundancy between the frames in process of the temporal filtering.

The video encoder may further comprises a spatial transformation unit eliminating a spatial redundancy between the plural frames, wherein the bit-stream generation unit combines information on the sequences of eliminating temporal redundancy and spatial redundancy to obtain the transformation coefficients and generates the bit-stream.

According to a further aspect of the present invention, there is provided a method for video decoding, comprising (a) extracting information regarding encoded frames and the redundancy elimination sequence by receiving and interpreting a bit-stream, (b) obtaining transformation coefficients by inverse-quantizing the information regarding the encoded frames, and (c) restoring the encoded frames through an inverse-spatial transformation and an inverse-temporal transformation of the transformation coefficients inversely to the redundancy elimination sequence.

In step (a), information on the number of encoded frames per GOP is further extracted from the bit-stream.

According to a still further aspect of the present invention, there is provided a video decoder comprising a bit-stream interpretation unit interpreting a received bit-stream to extract information regarding encoded frames therefrom and the redundancy elimination sequence, an inverse-quantization unit inverse-quantizing the information regarding the encoded frames to obtain transformation coefficients therefrom,

an inverse spatial transformation unit performing an inverse-spatial transformation process, and an inverse temporal transformation unit performing an inverse-temporal transformation process, wherein the encoded frames of the bit-stream are restored by performing the inverse-spatial process and the inverse-temporal transformation process on the transformation coefficients inversely to the sequence of the redundancy elimination sequence of the encoded frames by referencing the redundancy elimination sequence.

According to another still further aspect of the present invention, there is provided a storage medium recording thereon a program readable by a computer so as to execute a video coding or decoding according to any one of the above-described exemplary embodiments.

For a better understanding of the invention, and to show how embodiments of the same may be carried into effect, reference will now be made, by way of example, to the accompanying diagrammatic drawings in which:

FIG. 1 illustrates temporal decompositions in scalable video coding and decoding processes employing a conventional MCTF scheme;

FIG. 2 illustrates temporal decompositions in scalable video coding and decoding processes employing a conventional UMCTF scheme;

FIG. 3 illustrates temporal decompositions in scalable video coding and decoding according to an exemplary embodiment of the present invention;

FIG. 4 illustrates temporal decompositions in scalable video coding and decoding according to another exemplary embodiment of the present invention;

FIG.5 illustrates hierarchical coding (or decoding) in FIG. 4;

FIG. 6 illustrates possible connections between frames in the course of coding while maintaining the scalability by an encoder-side;

FIG. 7 illustrates referencing between frames of neighboring GOPs to increase coding efficiency according to another exemplary embodiment of the present invention;

FIG. 8 illustrates a plurality of referencing modes used to increase the coding efficiency according to another exemplary embodiment of the present invention;

FIG. 9 illustrates hierarchical structures and kinds of frames when the plurality of referencing modes are used;

FIG 10 illustrates an example of video coding in a video sequence having a high fluctuation according to the exemplary embodiment of FIG. 9;

FIG. 11 illustrates an example of video coding in a video sequence having a little fluctuation, according to the exemplary embodiment of FIG. 9;

FIG. 12 is a functional block diagram illustrating a construction of scalable video encoder according to an exemplary embodiment of the present invention;

FIG. 13 is a functional block diagram illustrating a construction of scalable video encoder according to another exemplary embodiment of the present invention; and

FIG. 14 is a functional block diagram illustrating a construction of scalable video decoder according to an exemplary embodiment of the present invention.

Hereinafter, exemplary embodiments of the present invention will be described in detail with reference to the accompanying drawings.

A scalable video coding algorithm compresses frames on a GOP (Group of Picture) basis. The size of a GOP (the number of frames constituting a GOP) may be determined differently depending upon a coding algorithm but is preferably determined to be $2^n$ ($n$ is a natural number). The GOP is assumed to have 8 frames in the exemplary embodiments of the present invention to be described later; however, this is merely by way of example. In this regard, even though the GOP size varies, this should be construed to fall under the protected scope granted to the present invention as far as it implies the technical idea of the present invention.

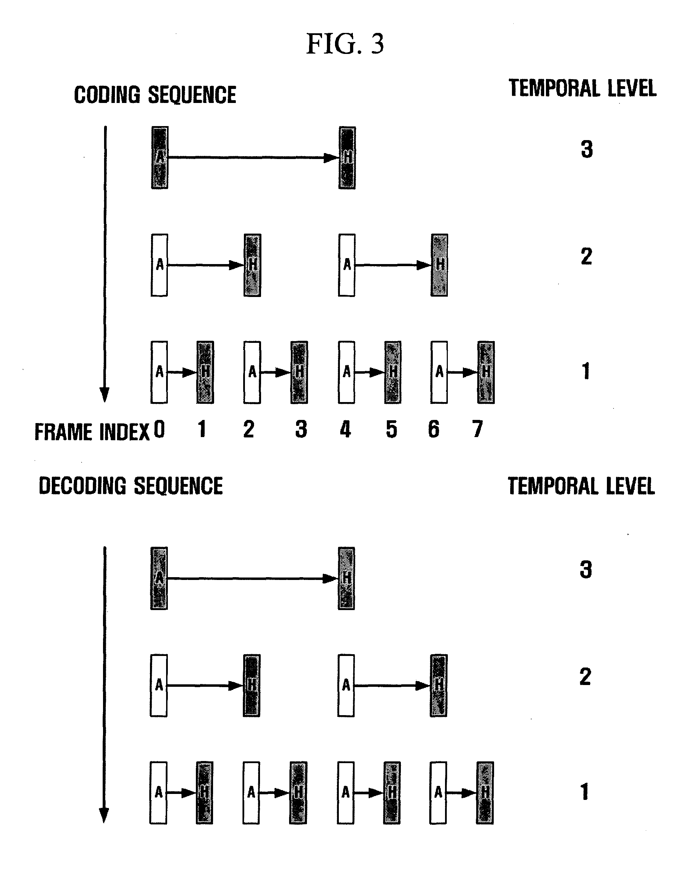

FIG. 3 illustrates temporal decompositions in scalable video coding and decoding according to an exemplary embodiment of the present invention.

Referring to FIG. 3, both temporal decompositions (that is, temporal filtering) in coding and decoding are performed from higher temporal levels to lower temporal levels in sequence. Temporal decomposition by an encoder-side from frames at higher temporal levels to those at lower temporal levels in sequence constitutes a main feature of the present invention distinguished from conventional art. Accordingly, the encoder-side can also achieve temporal scalability according to the present invention.

The coding process will be described in more detail below.

"A" frames shown in the Figures refer to frames which have not been filtered in temporal filtering. In other words, the "A" frames may refer to frames whose prediction-based temporal filtering has not been performed. "H" frames shown in the Figures refer to frames whose temporal filtering has been performed. Each macroblock constituting the "H" frame includes information on differences obtained through comparison with the macroblock corresponding to a frame targeted for reference (hereinafter referred to as "reference frame").

At first, an index whose temporal level is 3 encodes a 0 numbered frame (hereinafter referred to as "0 numbered frame"), where encoding is performed by performing only spatial transformation, not performing temporal filtering. The 4 numbered frame is temporally filtered by referencing the original 0 numbered frame stored in a buffer as not encoded. Each block of the 4 numbered frame whose temporal filtering has been performed records thereon information on differences between blocks corresponding to the original 0 numbered frame. That is, the 2 numbered frame is temporally filtered by referencing the original 0 numbered frame and the 6 numbered frame is temporally filtered by referencing the original 4 numbered frame. In the same manner, frames at the temporal level 1 are temporally filtered. That is, 1, 3, 5 and 7 numbered frames are temporally filtered by referencing the original 0, 2, 4 and 6 numbered frames respectively. The 0 numbered frame whose temporal filtering has not been performed and the 0 to 7 numbered frames (frames with dark colors) whose temporal filtering has been performed are compressed through a quantization process after they are temporally transformed. To the compressed information is added information on motion vectors obtained in the temporal filtering process and other necessary information, to generate a bit-stream, and the bit-stream is transmitted to the decoder-side through a transmission medium.

Decoding process will be described in more detail. Frames with darker color refer to coded frames obtained from the bit-stream and white frames refer to frames restored through the decoding process.

At first, the 0 numbered frame at the temporal level 3 is decoded (the original 0 numbered frame is restored by performing inverse-quantization and inverse-temporal transformation). The 4 numbered frame temporally filtered by referencing the original 0 numbered frame as decoded is restored to the original 4 numbered frame through inverse-temporal filtering. Then, inverse-temporal filtering is performed with respect to frames at the temporal level 2 temporally filtered. Inverse-temporal filtering is performed with respect to frames at the temporal level 2 temporally filtered by referencing the original 0 numbered frame as restored, and the 6 numbered frame temporally filtered is inverse-temporally filtered by referencing the original 4 numbered frame as restored. In the same manner, frames at the temporal level 1 temporally filtered is inverse-temporally filtered. That is, the 1, 3, 5 and 7 numbered frames are inverse-temporally filtered by referencing the original 0, 2, 4 and 6 numbered frames as restored.

According to the above exemplary embodiment, a video stream compatible in the conventional MCTF-based scalable video decoder may be generated. However, it should be noted that the bit-stream coded according to the above exemplary embodiment may not imply that it is completely compatible in the conventional MCTF-based scalable video decoder. Herein, the term "compatible" implies that low-frequency subbands, being decomposed in comparison with frame pairs in the conventional MCTF scheme and not updated with average values of frame pairs may be compatible with a decoder for restoring a video stream coded in a MCTF scheme employing a coding scheme in which the original frames are not temporally filtered.

To first describe the temporal scalability of the decoder-side, the decoder-side can restore the 0 numbered frame at the temporal level 3 when it has received coded frames. If decoding is suspended, a video sequence having 1/8 of the frame rate can be obtained. After restoring the 0 numbered frame at the temporal level 3, if decoding is suspended as the 4 numbered frame at the temporal level 2 has been restored, a video sequence having 1/4 of the frame rate can be obtained. In the same manner, a video sequence having 1/2 of the frame rate and the original frame rate can be obtained.

Next, the temporal scalability by the encoder-side according to the present invention will be described. If the encoder-side codes the 0 numbered frame at the temporal level 3 and transfers the coded 0 numbered frame to the decoder-side as the coding process is in suspension (it is suspended on a GOP basis), the decoder-side can restore a video sequence having 1/8 of the frame rate. If the encoder-side codes the 0 numbered frame at the temporal level 3, temporally filters the 4 numbered frame and then transfers the coded 0 and 4 numbered frames to the decoder-side as the coding process is in suspension, the decoder-side can restore a video sequence having 1/4 of the frame rate. Likewise, if the coded 0, 2, 4 and 6 numbered frames are transferred to the decoder-side as the coding process is in suspension after temporally filtering and coding the 2 and 6 numbered frames at the temporal level 2, the decoder side can restore a video sequence having 1/2 of the frame rate. According to the present invention, even where real-time operation relative to all the frames of GOPs is insufficient because of insufficient operation capability or other reasons for coding by the encoder-side in an application requiring real-time coding, even if the coding is only the coding relative to partial frames, by a codec whose coding algorithm has not been corrected, which are transferred to the decoder-side, the decoder-side can restore any video sequence having a lower frame rate.

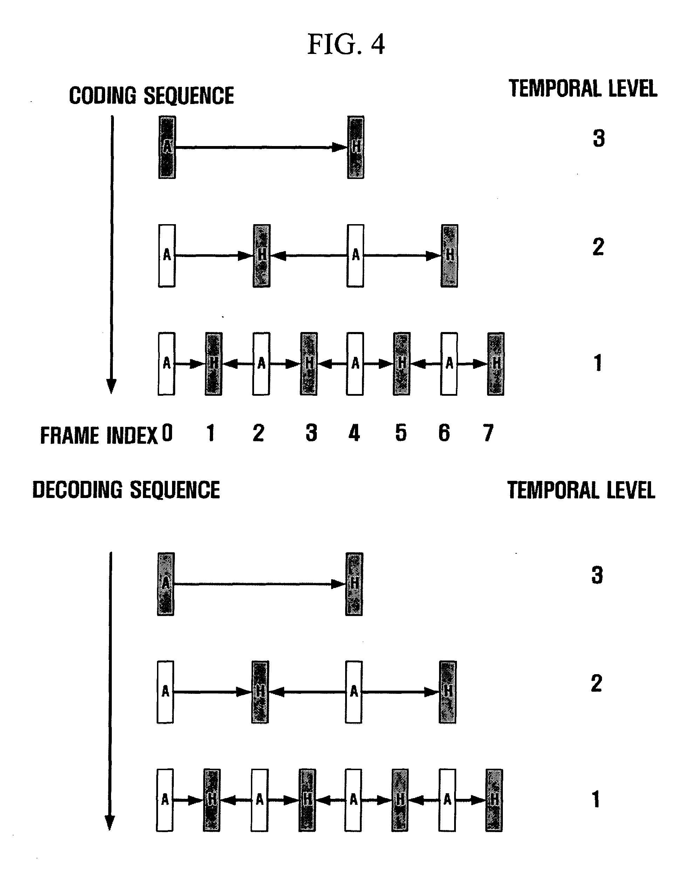

FIG. 4 illustrates temporal decompositions in scalable video coding and decoding according to another exemplary embodiment of the present invention.

This exemplary embodiment illustrates an example in which a video coding algorithm according to the present invention is applied to an UMCTF-based scalable video coding process.

In comparison of the UMCTF-based video coding and decoding shown in FIG. 2 with those shown in FIG. 4, it can be known that there are different coding sequences by the encoder-sides. That is, the temporal filtering by the encoder-side is sequentially performed from frames at the higher temporal level to frames at the lower temporal level. This will be described below in more detail.

At first, the 0 numbered frame at the highest temporal level is not temporally filtered but merely coded. Then, the 4 numbered frame is temporally filtered by referencing the original 0 numbered frame. After then, the 2 numbered frame at the temporal level 2 is temporally filtered by referencing the original 0 and 4 numbered frames and the 6 numbered frame is temporally filtered by referencing the original 4 numbered frame. To temporally filter a certain frame by referencing two frames implies that the frame is temporally filtered by so called bidirectional prediction. Thereafter, the 1 numbered frame at the temporal level 1 is temporally filtered by referencing the original 0 and 2 numbered frames, the 3 numbered frame is temporally filtered by referencing the original 2 and 4 numbered frames, the 5 numbered frame is temporally filtered by referencing the original 4 and 6 numbered frames, and the 7 numbered frame is temporally filtered by referencing the original 6 numbered frame.

The decoding process serves to restore a video sequence through inverse-temporal filtering in the same sequence as in the coding process.

As illustrated in the embodiment shown in FIG. 3, the encoder-side as well as the decoder-side can have temporal scalability in this exemplary embodiment. Since a bidirectional prediction-based temporal level is used in the embodiment illustrated in FIG. 4, video compression according to this exemplary embodiment can improve compression efficiency as compared to the video compression according to FIG. 3.

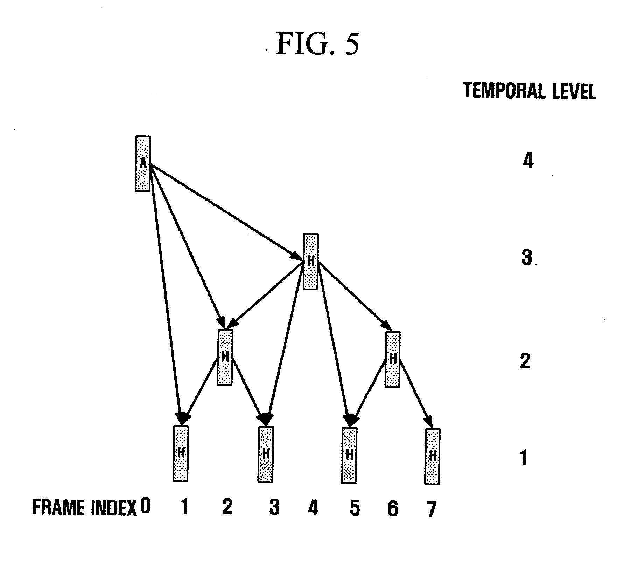

FIG. 5 illustrates hierarchical coding (or decoding).

The exemplary embodiment illustrated in FIG. 4 may be depicted in a hierarchical manner as in FIG. 5 for easier understanding of the present invention.

As illustrated, all the frames at each temporal level are expressed as nodes, and referencing connections between them are indicated with arrows. To describe FIG. 5 with respect to a coding process, it implies that the original frame corresponding to the node from which an arrow starts can be a reference frame for temporal filtering of another frame. The frame corresponding to the node at which the arrow arrives can be a high-frequency subband temporally filtered by referencing the original frame of the node from which the arrow starts. To describe it with respect to a decoding process, the original frame corresponding to the node from which an arrow starts can be a reference frame for inverse-temporal filtering of another frame, and the frame corresponding to the node at which the arrow arrives can be a high-frequency subband, which is ready to be restored to the original frame through inverse-temporal filtering by referencing the original frame (restored frame) of the node from which the arrow starts. In view of the encoder-side, the term "original frame" may refer to the frame before temporal filtering is performed, but it may refer to the frame restored through inverse-filtering of the coded frame in view of the decoder-side.

As illustrated, only necessary frames can be located in each temporal level. For example, it is shown that only one frame among frames of a GOP comes in the highest temporal level. In this exemplary embodiment, the 0 numbered frame has the highest temporal level, because it has considered compatibility with the conventional UMCTF. If the frame index having the highest temporal level is not zero (0) , the hierarchical structures of the temporal filtering processes by the encoder-side and the decoder-side may be different from the structure depicted in FIG. 5. Referring to this figure, the 0 numbered frame is coded into the A frame whose temporal filtering is not performed at the highest temporal level when the GOP size is 8, and the 4 numbered frame is coded to a high frequency subband by referencing the original frame of the 0 numbered frame at the next temporal level. Then, the 2 numbered frame is coded to a high frequency subband by referencing the original frames of the 0 and 4 numbered frames, and the 6 numbered frame is coded to a high frequency subband by use of the original frame of the 4 numbered frame. Likewise, the 1, 3, 5 and 7 numbered frames are coded to high frequency subbands by use of the 0, 2, 4 and 6 numbered frames.

In the decoding process, the 0 numbered frame is first decoded. Then, the 4 numbered frame is decoded by referencing the restored 0 numbered frame. In the same manner, the 2 and 6 numbered frames are decoded by referencing the stored 0 and 4 numbered frames. Lastly, the 1, 3, 5 and 7 numbered frames are decoded by referencing the restored 0, 2, 4 and 6 frames.

Since both the encoder-side and the decoder-side code (or decode) starting from the frame at the higher temporal level, the scalable video coding algorithm according to this exemplary embodiment allows the encoder-side as well as the decoder-side to have temporal scalability.

In case of the conventional UMCTF algorithm, a video sequence could have been compressed by referencing a plurality of reference frames differently from the MCTF algorithm. The present invention retains this property of UMCTF. Conditions to maintain the temporal scalability both in the encoder-side and the decoder-side when a video sequence is restored by encoding and decoding the video by referencing a plurality of reference frames will be described below.

It is assumed that $F(k)$ indicates a frame having the $k$ index and $T(k)$ indicates a temporal level of a frame having the $k$ index. In order to establish the temporal scalability, any frame having lower temporal levels than the temporal level at which a certain frame is coded cannot be referenced. For example, the 4 numbered frame cannot reference the 2 numbered frame. If such kind of referencing is permitted, the coding process cannot stop at the 0 and 4 numbered frames (that is, the 4 numbered frame can only be coded after the 2 numbered frame has been coded). A set of reference frames $R_k$, which can be referenced by the frame $F(k)$, is determined by the following equation.

Equation 1

$$R_k = \{F(1)|T(1)>T(k)) \text{ or } ((T(1)=T(k)) \text{ and } 1<=k))\},$$

where 1 refers to an index of a reference frame.

In the meantime, $((T(1)=T(k))$ and $(1<=k))$ implies that the frame $F(k)$ is temporally filtered by referencing itself in the temporal filtering process (so called "intra mode"), which will be described later.

According to Equation 1, the conditions to maintain the scalability both in the encoder-side and the decoder-side can be arranged as follows.

The encoding process operations are the following. 1. Encode the first frame of a GOP as a frame having not referenced another frame, preferably, but not necessarily, to a frame (A frame) whose temporal filtering has not been performed. 2. For the frames at the next temporal level, make motion prediction and encode the frames, referencing possible reference frames satisfying Equation (1). At the same temporal level, the frames are encoded in the left-to-right order (in the order of the lowest to highest frame indexes). 3. Repeat operation (2) until all the frames are encoded, and then encode the next GOP until encoding for all the frames is completed.

The decoding process operations are the following. 1. Decode the first frame of a GOP. 2. Decode the frames at the next temporal level using proper reference frames among already decoded frames. At the same temporal level, the frames are decoded in the left-to-right order (in the order of the lowest to highest frame indexes). 3. Repeat operation (2) until all the frames are decoded, and then decode the next GOP until decoding for all the frames is completed.

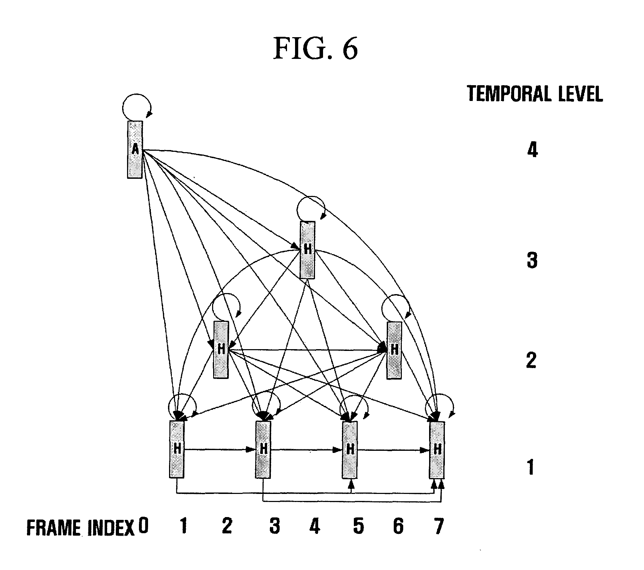

FIG. 6 illustrates possible connections between frames in the course of coding while maintaining the scalability by an encoder-side. This figure shows possible connections between reference frames satisfying the conditions of Equation 1.

In FIG. 6, the frames marked A are intra-coded (that is, reference no other frames), and frames marked H indicate that the concerned frame refers to a high frequency subband. The high frequency subband is a frame encoded with reference to one or more frames.

In FIG. 6, where the size of GOP is eight, the temporal level of a frame is in the sequence of 0, 4, (2, 6), (1, 3, 5, 7) for illustrative purposes. In addition, there is little problem in terms of the encoder-side temporal scalability and the decoder-side temporal scalability even where it is in the sequence of 1, 5, (3, 7), (0, 2, 4, 6). Likewise, the temporal level sequence of 2, 6, (0, 4), (1, 3, 5, 7) is permissible. In other words, any frames at the temporal level that can satisfy the encoder-side temporal scalability and the decoder-side temporal scalability are permissible.

As illustrated in FIG. 6, a frame can be encoded with reference to multiple frames. But, use of multiple reference frames to encode a frame shows an inclination to increase the amount of a memory used for temporal filtering and the time of delaying processing. Taking this into consideration, reference frames to encode a frame are constrained to two (2) for bi-directional prediction in the exemplary embodiments of the present invention. Hereinbelow, the maximum number of reference frames to encode each frame will be constrained to 2. Further, among the frames available for referencing, the frames having the closest temporal distance are used as reference frames to encode each frame. This is because closest frames actually have higher similarity than distant frames in most video sequences.

As described above, the frame at the highest temporal level within a GOP will be described below as the frame having the least frame index with respect to the exemplary embodiment, just for illustrative purposes. Thus, it should be noted that the frame at the highest temporal level may be a frame having a different index.

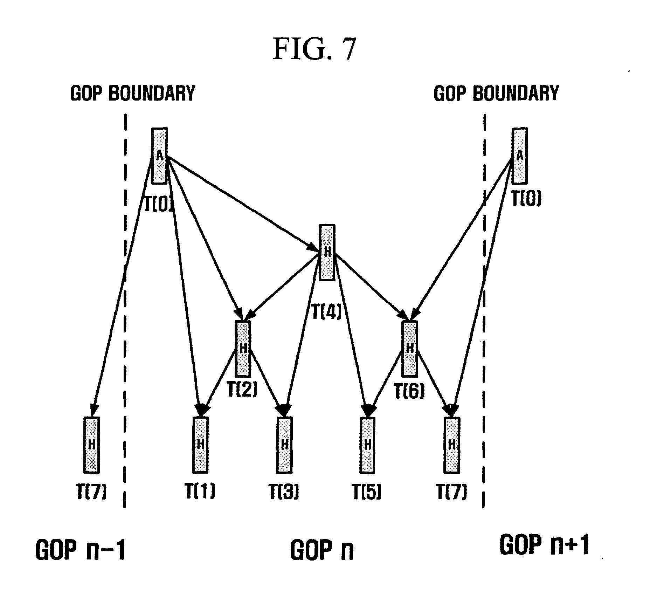

FIG. 7 illustrates referencing between frames of neighboring GOPs to increase coding efficiency according to another exemplary embodiment of the present invention.

As illustrated, the video coding algorithm according to the present invention can encode frames with reference to a plurality of frames, differently from the conventional MCTF algorithm. There is no need that the reference frames to be referenced for encoding must belong to a GOP. In other words, frames can be encoded with reference to a frame belonging to another GOP to enhance a video compression efficiency, which will be called "cross-GOP optimization". This cross-GOP optimization can support the conventional UMCTF algorithm. The reason why the cross-GOP optimization is available is because both the UMCTF and the coding algorithm according to the present invention uses A frames not temporally filtered, in lieu of L frames temporally filtered (high frequency subband).

In FIG. 6, when the 7 numbered frame is temporally filtered by way of bi-directional prediction, the temporal filtering is performed with reference to the original frames of the 0, 4 and 6 numbered frames. The 7 numbered frame encoded at this time has prediction errors with the 0, 4 and 6 reference frames accumulated. However, when the 7 numbered frame references the original frame of the 0 numbered frame of the next GOP (to calculate with the current GOP, the 8 numbered frame) as illustrated in FIG. 7, the accumulation of prediction errors may be conspicuously reduced. This is because the 7 numbered frame references the closest frame at the temporal level in the course of temporal filtering. In addition, since the 0 numbered frame at the next GOP as a reference frame is a frame not temporally filtered (that is, intra-coded), the quality of the 7 numbered frame can be remarkably enhanced. When a coded frame is decoded by the decoder-side, the 0 numbered frame is decoded and restored where the cross-GOP optimization is not done, the 4 numbered frame is restored through inverse-temporal filtering with reference to the restored 0 numbered frame, and the 7 numbered frame is restored through inverse-temporal filtering with reference to the restored 4 numbered frame. At this time, errors made in the course of restoration (including errors when the 4 numbered frame is restored, when the 6 numbered frame is stored and when the 7 numbered frame is restored) are accumulated. However, where the cross-GOP optimization is applied, the 7 numbered frame can be restored with reference to the 0 numbered frame at the next GOP already restored (that is, the 8 numbered frame), wherein there is only an error when the 0 to 7 numbered frames at the next GOP are restored, since the 7 numbered frame is restored through inverse-temporal filtering with reference to the 0 numbered frame of the next GOP. In temporal filtering and inverse-temporal filtering as structured in FIG. 7, the operation sequence relative to frames may be in the sequence of 0, 4, 2, 1, 3, 8 (0 of the next GOP), 6, 5 and 7. The operation sequence may be in the order of 0, 4, 8 (0 of the next GOP), 2, 6, 1, 3, 5 and 7 wherein the next GOP may be in the order of 4, 8, 2, 6, 1 and 3. The final delay time may have a three-frame interval in the former case, whereas the final delay time may have a seven-frame interval in the latter case. Here, the final delay time means a delay time generated due to the algorithm itself, exclusive of the operation time of encoding and decoding and transmission time of data encoded. That is, the final delay time refers to the time which the decoder-side requires for playing video images without interruption when the video sequence of a specific frame rate is compressed and transmitted to the decoder-side. In the former case, the 0 numbered frame can do immediate encoding and immediate transmission at the same time with video photographing, but the 1 numbered frame cannot do immediate encoding simultaneously with the video encoding. To encode the 1 numbered frame, the 4 and 2 numbered frames should first be encoded in terms of the video sequence, and thus, the video coding relative to the 1 numbered frame may be possible only after the 2, 3 and 4 numbered frames are all photographed after the 1 numbered frame has been photographed. At this time, the delay time at a 3-frame interval is generated. The 3 and 4 numbered frames can be immediately encoded. Likewise, since the 8 numbered frame is requested to encode the 1 numbered frame in the latter case, the delay time is the 7-frame interval. Both in the former and latter cases, the temporal relation from input of the video sequence photographed to output of the video sequence restored can be arranged as shown in Table 1.

Table 1

| Time | 0 1 2 3 4 5 6 7 8 9 |
|---|---|
| In the sequence of 0, 4, 2, 1, 3, 6, 5, 7 Time available for encoding | 0 4 4 4 4 6 6 7 8 12 |
| Delay time | 0 3 2 1 0 1 0 0 0 3 |
| In the sequence of 0, 4, 2, 6, 1, 3, 5, 7 Time available for decoding | 3 4 5 6 7 8 9 10 11 12 |
| In the sequence of 0, 4, 8, 2, 6, 1, 3, 5, 7 Time available for encoding | 0 8 8 8 8 8 8 8 8 16 |
| Delay time | 0 7 6 5 4 3 2 1 0 7 |
| In the sequence of 0, 4, 8, 2, 6, 1, 3, 5, 7 Time available for decoding | 7 8 9 10 11 12 13 14 15 16 |

Meanwhile, when the 4 numbered frame is encoded, the 8 numbered GOP may be referenced. Even in this case, the final delay time will have the 7-frame interval. This is because the 8 numbered frame is needed to encode the 1 numbered frame.

With respect to the exemplary embodiments above, an encoding and a decoding algorithm allowing the encoder-side to have a scalability, compatible with a decoding algorithm with limitations in that frames are decoded in a specific sequence (in most cases, from the frame at the highest temporal level to the frame at the lowest temporal level), and in frames available for referencing. The exemplary embodiments of the present invention make it possible for the encoder-side to be compatible with a plurality of conventional decoder-sides and also to have a temporal scalability. According to the present invention, the encoder-side may be allowed to have a scalability and the maximum delay time at the 3-frame interval. Further, the present invention may improve the encoded video quality by supporting the cross-GOP optimization. Besides, the present invention may support encoding and decoding of videos having non-dichotomous frame rates and improvement of picture quality through intra macroblock prediction.

In the case of encoding and decoding of videos having non-dichotomous frame rates, they may also be supported by the existing UMCTF coding algorithm. In other words, the UMCTF-based scalable video encoder can perform temporal filtering with reference to a distantly separate frame as well as the closed frame in compression of video sequences. For example, in coding a GOP comprised of 0 to 5 numbered frames, UMCTF-based temporal filtering is performed by setting 0 to 3 numbered frames to "A" frames and 5 numbered frames to "H" frames, and then temporally filtering them. After then, the 0 numbered frame and the 3 numbered frame are compared, and the former frame is set to "A" frame and the latter frame is set to "H" frame, and they are temporally filtered. In the present invention, video coding having non-dichotomous frame rates is available, as in UMCTF, but the difference from the conventional UMCTF is in that the 0 numbered frame is encoded to "A" frame and the 3 numbered frame is decoded to an "H" frame with reference to the original frame of the 0 numbered frame, and then, encodes 1, 2, 4 and 5 numbered frames to "H" frames.

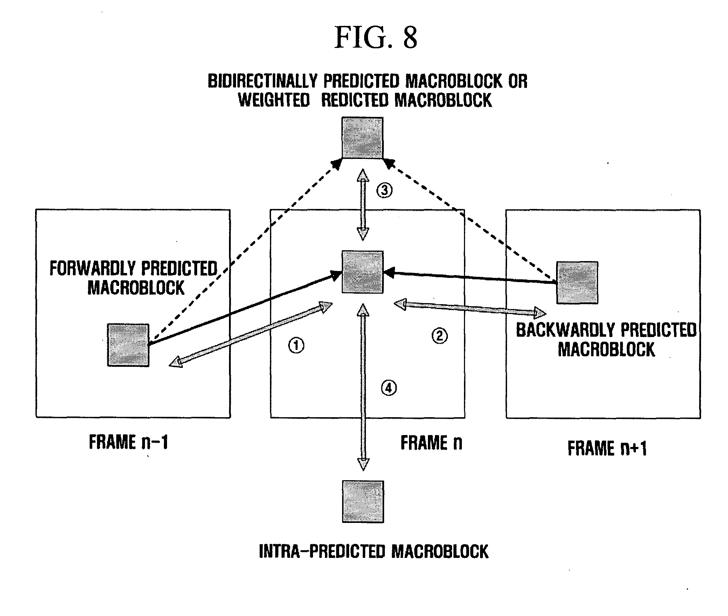

Intra macroblock prediction (hereinafter referred to as "intra prediction") will be described with reference to FIG. 8.

FIG. 8 illustrates a plurality of referencing modes used to increase the coding efficiency according to another exemplary embodiment of the present invention.

Illustrated in FIG. 8 are (1) forward prediction, (2) backward prediction, (3) bi-directional prediction (or weighted bi-direction prediction) and (4) intra prediction. Conventionally, three modes of forward directional prediction, inverse directional prediction and bi-directional prediction have been supported in the scalable video coding. Further, the present invention comprises two modes of bi-directional prediction with weighted value and intra prediction so as to increase the compression efficiency. Application of the intra prediction can improve the coding efficiency of quickly changing video sequences.

First, determination of an inter macroblock prediction (hereinafter referred to as "inter prediction") mode will be considered below.

Forward prediction, backward prediction and bi-directional prediction can be easily realized because bi-directional prediction and multiple reference frames are permitted. A well-known Hierarchical Variable Block Size Matching (HVBSM) algorithm may be used, but the exemplary embodiments of the present invention employ a motion prediction of a fixed block size. For the sake of convenience, it is assumed that $E(k, -1)$ refers to the Sum of Absolute Differences (hereinafter referred to as "SAD") in the $k^{th}$ forward prediction, and $B(k, -1)$ refers to the total number of bits to be allotted for quantizing motion vectors in the forward prediction. Likewise, it is assumed that $E(k, +1)$ refers to the SAD in the $k^{th}$ backward prediction and $B(k, +1)$ refers to the total number of bits to be allotted for quantizing motion vectors in the backward prediction, $E(k, *)$ refers to the SAD in the $k^{th}$ bi-directional prediction and $B(k, *)$ refers to the total number of bits to be allotted for quantizing motion vectors in the bi-directional prediction, and $E(k, \#)$ refers to the SAD in $k^{th}$ bi-directional prediction with weighted value and $B(k, \#)$ refers to the total number of bits allotted for quantizing motion vectors in the bi-directional prediction with weighted value. The cost for forward, backward and bi-directional prediction modes, and a bi-directional prediction with weighted value can be described with respect to Equation 2.

Equation 2

$$C_f = E(k,-1) + \lambda B(k,-1),$$

$$C_b = E(k,1) + \lambda B(k,1),$$

$$C_{bi} = E(k, *) + \lambda\{B(k, -1) + B(k,1)\}, \text{ and}$$

$$C_{wbi} = E(k,\#) + \lambda\{B(k,-1) + B(k,1) + P\}$$

where $C_f$, $C_b$, $C_{bi}$ and $C_{wbi}$ refer to costs for forward, backward, bi-directional, and a bi-directional prediction with weighted value prediction modes, respectively, and P refers to a weighted value.

$\lambda$ is a Lagrangian coefficient to control the balance between the motion and texture (image) bits. Since the scalable video encoder cannot know the final bit-rates, $\lambda$ should be optimized with respect to the nature of the video sequence and bit-rates mainly used in the target application. By computing minimum costs therefor as defined in Equation (2), the best optimized inter-macroblock prediction mode can be determined.

Under the bi-directional prediction mode, a certain block is encoded by recording a difference between a virtual block and the block to be encoded on the block to be encoded, the virtual block being formed by averaging a reference block in the forward prediction and a reference block in the backward prediction. Thus, to restore the encoded block, information on errors and two motion vectors to locate a block targeted for referencing are needed.

By the way, unlike bi-directional prediction, the bi-directional prediction with weighted value is based on each reference block and the block to be encoded being different in the degree of similarity. For the bi-directional prediction with weighted value, pixel values of a reference block in forward prediction is multiplied by P and pixel values of a reference block in backward prediction is multiplied by (1-P), and both results are summed to make a virtual block. The block to be encoded is encoded by referring to the virtual block as a reference block.

Next, determination by an intra macroblock prediction mode will be described.

Scenes can be changed very fast in several video sequences. In an extreme case, a frame which has no property of temporal redundancy with neighboring frames may be located. To solve this problem, an MC-EZBC-based coding method supports a property of adaptive GOP size. The quality of adaptive GOP size allows temporal filtering to be suspended when the number of pixels not linked is larger than the reference value as predetermined (about 30% of the whole pixels) and the concerned frame to be encoded to an "L" frame. Employing this method improves the coding efficiency better than employing the conventional MCTF method. However, since this method is uniformly determined on a frame basis, the present invention has introduced a concept of intra macroblock used in a standard hybrid encoder, as a more flexible scheme. Generally, an open loop codec cannot use information of a neighboring macroblock because of prediction draft, whereas a hybrid codec can use a mode of multiple intra prediction. In this exemplary embodiment, a DC prediction has been used for an intra prediction mode. In this mode, a macroblock is intra-predicted by a DC value for Y, U and V components of its own. When the cost at the intra prediction mode is less than the cost at the best inter prediction mode as described above, the intra prediction mode is selected. In this case, a difference between original pixels and DC values is encoded and three DC values in lieu of motion vectors are encoded. The cost at the intra prediction mode can be defined by Equation 3.

Equation 3

$$C_i = E(k,0) + \lambda B(k,0),$$

where E(k, 0) refers to a SAD at the $k^{th}$ intra prediction (different between original luminance values and DC values) and B(k, 0) refers to the total number of bits to encode three DC values.

When $C_i$ is less than the values calculated by Equation 2, encoding by the intra prediction mode is performed. When all macroblocks are encoded at an intra prediction mode with only a single set of DC values, it is desirable to change them to "A" frames ("I" frames in the conventional MPEG-2) encoded not based on prediction. On the other hand, when a user desires to view arbitrary spots in the course of a video sequence or automatically edit a video, it is preferred that the video sequence has as many "I" frames as possible. In this case, a method of changing inter-prediction frames to "I" frames may be desirable.

Even though all macroblocks are not coded by an intra prediction mode, if they are changed to "I" frames when a predetermined percentage thereof (for example, 90%) are coded at the intra prediction mode, viewing arbitrary spots in the course of a video sequence or automatic editing of a video may be accomplished more easily.

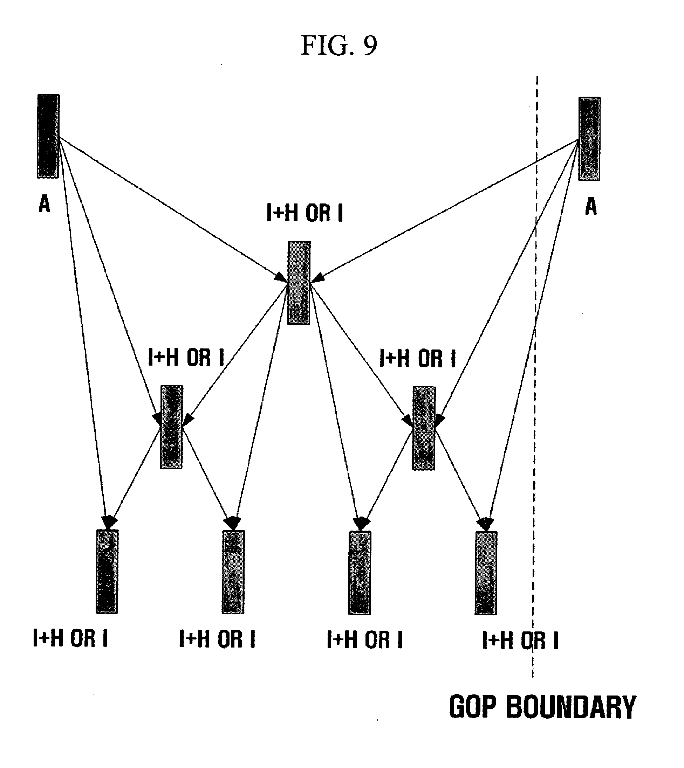

FIG. 9 illustrates hierarchical structures and kinds of frames when the plurality of referencing modes are used.

"I+H" means that frames comprise both macroblocks at intra prediction and macroblocks at inter prediction. "I" means that the frame is coded by itself without prediction. In other words, "I" frame refers to a frame changed so as to be coded by itself without prediction when the percentage of macroblocks at intra prediction is larger than a reference value. The intra prediction may be used in an initial frame of a GOP (the frame at the highest temporal level), but this is not employed in the present invention, because it is not as effective as the original frame-based wavelet transformation.

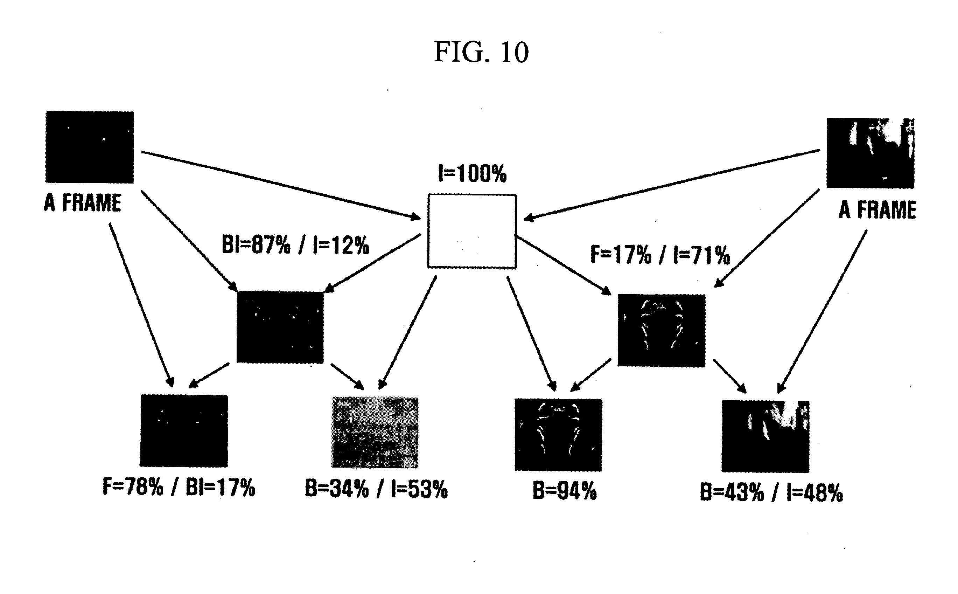

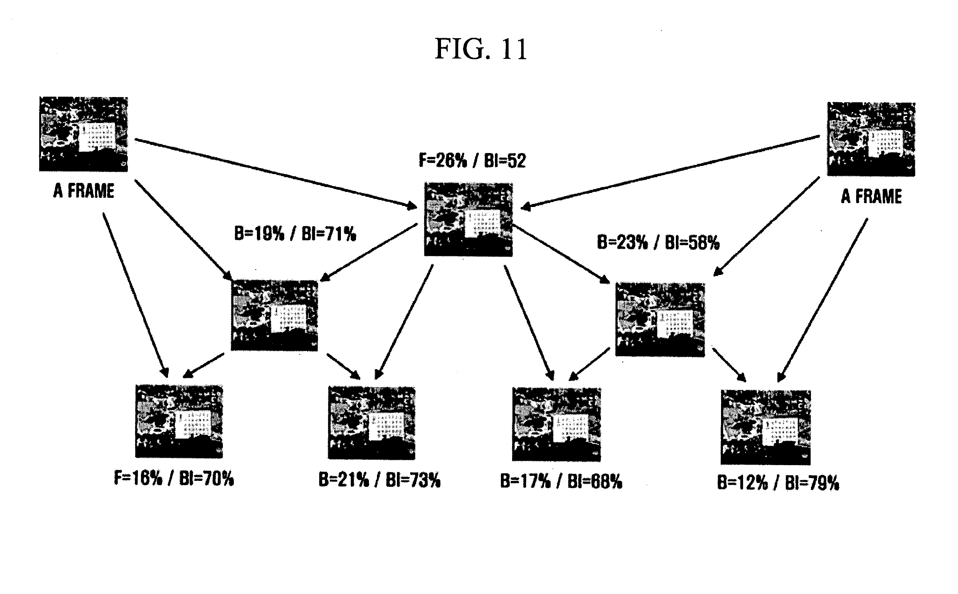

FIGS. 10 and 11 illustrate examples in which frames are predicted at various modes in a video sequence having high fluctuation and in a video sequence having little fluctuation. The term "percent" indicates a percentage at production mode, "I" indicates a percentage at intra prediction (provided the first frame of a GOP is not used for prediction), "BI" indicates a percentage at bidirectional prediction, "F" indicates a percentage at forward prediction and "B" indicates a percentage at backward prediction.

Referring to FIG. 10, it is shown that the percentage of F is overwhelming by 78% since the 1 numbered frame is almost similar to the 0 numbered frame, and the percentage of BI is overwhelming by 87% since the 2 numbered frame is close to the middle between the 0 numbered frame and the 4 numbered frame (that is, an image in which the 0 numbered frame is brighter than others). I is coded by 100% since the 4 numbered frame is completely different from other frames whereas B is coded by 94% since the 5 numbered frame is completely different from the 4 numbered frame and is similar to the 6 numbered frame.

Referring to FIG. 11, all the frames are similar. BI shows the best performance where all the frames are actually very similar. Thus, FIG. 11 demonstrates that the percentages of BIs are generally high.

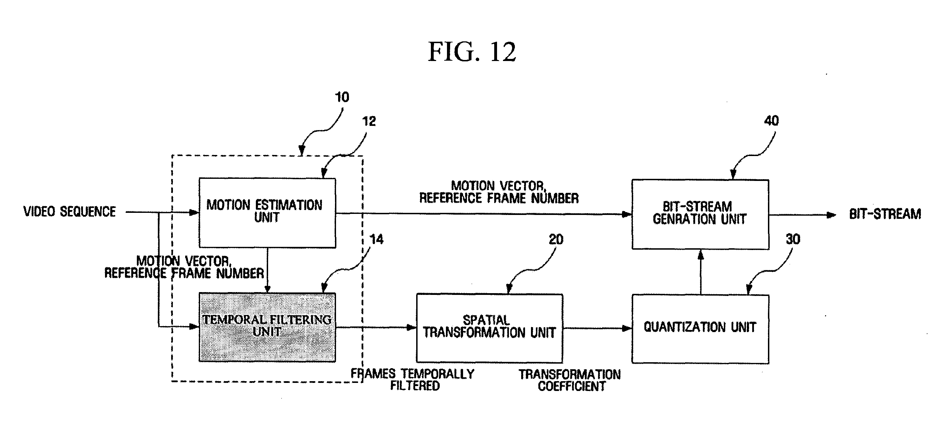

FIG. 12 is a functional block diagram illustrating a construction of scalable video encoder according to an exemplary embodiment of the present invention.

A scalable video encoder receives a plurality of input frames constituting a video sequence, compresses them on a GOP basis and generates a bit-stream. For this purpose, the scalable video encoder comprises a temporal transformation unit 10 eliminating temporal redundancies between a plurality of frames, a spatial transformation unit 20 eliminating spatial redundancy, a quantization unit 30 quantizing transformation coefficients generated after temporal and spatial redundancies are eliminated, and a bit-stream generation unit 40 generating a bitstream of a combination of quantized transformation coefficients and other information.

The temporal transformation unit 10 comprises a motion estimation unit 12 and a temporal filtering unit 14 to compensate for motions between frames and filter the frames temporally.

At first, the motion estimation unit 12 seeks motion vectors between each macroblock of frames whose temporal filtering is being executed and each macroblock of reference frames corresponding to them. Information on motion vectors is provided to the temporal filtering unit 14, and the temporal filtering unit 14 performs a temporal filtering relative to plural frames by use of information on the motion vectors. In an exemplary embodiment of the present invention, the temporal filtering progresses from the frame at the highest temporal level to the frame at the lowest temporal level in sequence. In case of frames at the same temporal level, the temporal filtering is progressed from the frame having the lowest frame index (the frame temporally earlier) to the frame having the highest frame index. Among frames constituting a GOP, the frame having the highest frame level uses the frame having the lowest frame index, by way of example. However, it is also possible to select another frame in the GOP as the frame having the highest temporal level.

Frames whose temporal redundancies are eliminated, that is, temporally filtered frames, pass through the spatial transformation unit 20 to thereby eliminate spatial redundancies. The spatial transformation unit 20 eliminates spatial redundancies of the temporally filtered frames by use of spatial transformation. In this regard, wavelet-based transformation is used in the present invention. In the wavelet-based transformation currently known, a frame is divided into four equal parts, an image compressed to have one-fourth area, very similar to the whole image, is positioned on one of the quarter faces and the remaining quarter faces are substituted for information ("H" image) with which the whole image can be restored through the "L" image. In the same manner, an "L" frame can be replaced with an "LL" image having one-fourth area and information to restore the "L" image. The image compression method using this wavelet-based method has been applied to a compression method called JPEG2000. Spatial redundancies between frames may be eliminated through wavelet-based transformation, which allows original image information to be stored in the reduced form of the transformed image, unlike DCT transformation, and thus, video coding having spatial scalability is available by use of the reduced image. However, the wavelet-based transformation is merely by way of example. If spatial scalability may not be achieved, the DCT method widely used in moving picture compression such as MPEG-2 may be used.

Frames temporally filtered become transformation coefficients through spatial transformation, which are then transmitted to the quantization unit 30 and finally quantized. The quantization unit 30 quantizes transformation coefficients, real-number type coefficients, to then change them to integer-type transformation coefficients. That is, the amount of bits to represent image data through the quantization may be reduced. In the present exemplary embodiment, the quantization process to the transformation coefficients is performed through an embedded quantization method. Quantization relative to transformation coefficients is performed through the embedded quantization method, and thus, the amount of information required for quantization may be reduced and SNR scalability may be obtained by the embedded quantization. The term "embedded" is used to imply that the coded bit-stream involves quantization. In other words, compressed data are generated sequentially according to the highest degree of visual importance or are tagged by visual importance. Actually, quantization (or visual importance) level can be enabled in a decoder or in a transmission channel. If transmission bandwidth, storage capacity, display resources are permitted, the image can be stored without loss. If not, the image is quantized as much as required by the most constrained resource. Embedded quantization algorithms currently known comprise EZW, SPIHT, EZBC, EBCOT and so on. In the present exemplary embodiment, any of the algorithms known may be used.

The bit-stream generation unit 40 generates a bit-stream including information on a coded image and information (bits generated by coding motion vectors) on motion vectors obtained in the motion estimation unit 12 and attaches a header thereto. Information allowed to be included in the bit-stream would be the number of frames coded within a GOP (or coded temporal level) and so on. This is because the decoder side should know how many frames constitutes several GOPs since the encoder side has the temporal scalability.

When the wavelet-based transformation is used to eliminate spatial redundancies, the original form of an image remains in the originally transformed frame. Accordingly, the wavelet-based transformation method may perform temporal transformation after passing through spatial transformation, quantize the frames and then generate a bit-stream, unlike the DCT-based moving picture coding method.

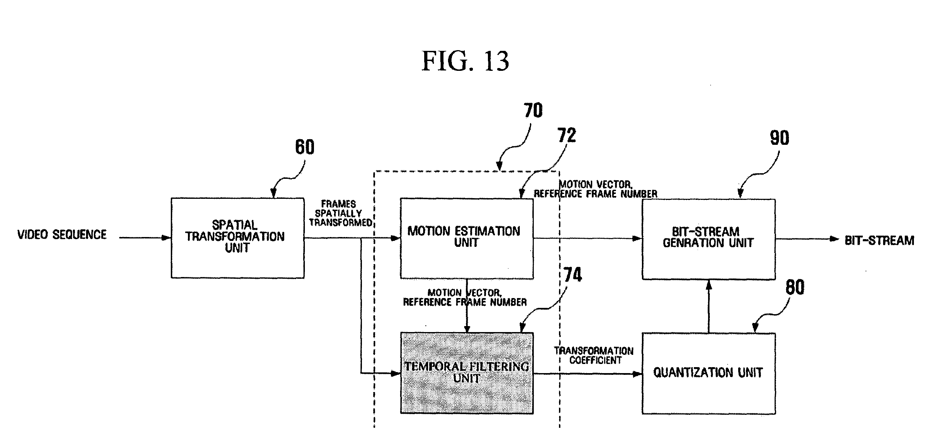

Another exemplary embodiment will be described with reference to FIG. 13.

FIG. 13 is a functional block diagram illustrating a construction of a scalable video encoder according to another exemplary embodiment of the present invention.

The scalable video encoder according to the exemplary embodiment of the present invention illustrated in FIG. 13 comprises a spatial transformation unit 60 eliminating spatial redundancies between plural frames constituting a video sequence, a temporal transformation unit 70 eliminating temporal redundancies, a quantization unit 80 quantizing transformation coefficients obtained by eliminating spatial and temporal redundancies between frames, and a bit-stream generation unit 90 generating a bit-stream in a combination of a coded image information and other information.

With reference to the term "transformation coefficients," a method of performing spatial transformation after temporal filtering in moving picture compression has mainly been used conventionally, this term has mainly referred to a value generated by spatial transformation. That is, the transformation coefficient has also been referred to "DCT coefficient when it was generated through DCT transformation, or wavelet coefficient when it was generated through wavelet transformation. In the present invention, transformation coefficient is a value generated by eliminating spatial and temporal redundancies between frames, referring to a value prior to quantization (embedded quantization). In the exemplary embodiment illustrated in FIG. 12, transformation coefficient indicates a coefficient generated passing through spatial transformation. However, it should be noted that the transformation coefficient in the exemplary embodiment illustrated in FIG. 13 may indicate a coefficient generated passing through temporal transformation.

Spatial transformation unit 60 eliminates spatial redundancies between plural frames constituting a video sequence. In this case, the spatial transformation unit employs wavelet-based transformation so as to eliminate spatial redundancies between frames. Frames whose spatial redundancies are eliminated, that is, frames spatially transformed are transmitted to the temporal transformation unit 70.

The temporal transformation unit 70 eliminates temporal redundancies between spatially transformed frames for which it comprises a motion estimation unit 72 and a temporal filtering unit 74. In the present exemplary embodiment, the temporal transformation unit 70 operates in the same manner as in the exemplary embodiment illustrated in FIG. 12. Between the two embodiments, a difference lies in that the input frames have been spatially transformed in FIG. 13, unlike the frames in FIG. 12. Another difference between them is that the temporal transformation unit 70 first eliminates temporal redundancies between frames spatially transformed and thereafter generates transformation coefficients for quantization.

The quantization unit 80 quantizes transformation coefficients and generates quantized image information (coded image information) and provides the same to the bit-stream generation unit 40. Quantization serves to obtain SNR scalability relative to a bit-stream to be finally generated through embedded quantization, as in the exemplary embodiment illustrated in FIG. 12.

The bit-stream generation unit 90 generates a bit-stream including information on coded images and information on motion vectors and attaches a header thereto. At this time, information (or coded temporal level) on the number of frames coded within a GOP may be included, as in the exemplary embodiment of FIG. 12.

Meanwhile, the bit-stream generation unit 40 of FIG. 12 and the bit-stream generation unit 90 of FIG. 13 may allow both information on the sequence of eliminating (hereinafter referred to as "redundancy elimination sequence") temporal redundancies and spatial redundancies to be included in the bit-stream so that a decoder-side can know whether the video sequence has been coded according to the embodiment of either FIGS. 12 or 13. Several methods to include a redundancy elimination sequence in the bit-stream may be available for use. By selecting a method as a reference, the other methods may be indicated in the bit-stream separately. For example, if the method in FIG. 12 is a reference method, information on a redundancy elimination sequence may not be indicated in the bit-stream generated by the scalable video encoder, but the redundancy elimination sequence may be included in the bit-stream generated by the scalable video decoder of FIG. 13. Otherwise, information on the redundancy elimination sequence may be indicated in both cases of FIGS. 12 and 13.

A scalable video encoder according to the exemplary embodiment of FIG. 12 and a scalable video encoder having all the functions of a scalable video encoder according to the exemplary embodiment of FIG. 13 can be realized and then the bit-stream owing to more efficient coding may be generated by coding video sequences according to the methods of FIGS. 12 and 13 and then comparing them. In this case, a redundancy elimination sequence should be included in the bit-stream. The redundancy elimination sequence may be determined on a sequence basis or on a GOP basis. In the former case, the redundancy elimination sequence should be included in the video sequence header, whereas the redundancy elimination sequence should be included in the GOP header in the latter case.

The exemplary embodiments of FIGS. 12 and 13 may be realized by means of hardware, but they may also be realized by use of software modules and any device having computing capability to perform them.

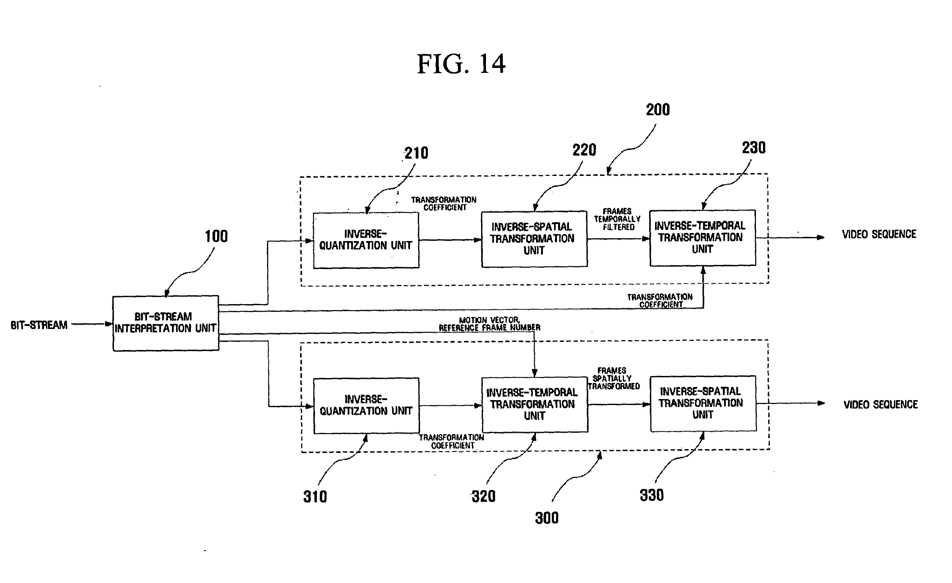

FIG. 14 is a functional block diagram illustrating a construction of a scalable video decoder according to an exemplary embodiment of the present invention.

A scalable video decoder comprises a bit-stream interpretation unit 100 interpreting a bit-stream input so as to extract each component included in the bit-stream, a first decoding unit 200 restoring coded images according to the embodiment of FIG. 12 and a second decoding unit 300 restoring coded images according to the embodiment of FIG. 13.

The first and the second decoding units may be realized by means of hardware or software modules. When they are realized in hardware or software modules, they may be realized separately as in FIG. 5 or in an integrated manner. When they are realized in an integrated manner, the first and the second decoding units employ inverse-redundancy elimination sequences in inverse to the redundancy elimination sequence obtained in the bit-stream interpretation unit 100.

On the other hand, the scalable video decoder can restore all the images coded according to different redundancy sequences as in FIG. 14. It may also restore only the images coded according to any one of a plurality of redundancy elimination sequences. When the redundancy elimination sequence is applied to the first decoding unit 200, the video sequence is restored through the first decoding unit 200, but it is restored through the second decoding unit 300 when the redundancy elimination sequence is applied to the second decoding unit 300. Also the bit-stream interpretation unit 100 can know the constrained temporal level sequence as the sequence of temporally filtering frames when there are temporal redundancies by interpreting the bit-stream. In the present exemplary embodiment, the constrained temporal level sequence can be known through a value of delay time control parameter to determine a coding mode. With respect to a process of restoring a video sequence from the coded image information, redundancy elimination by the first decoding unit 200 will be first described and redundancy elimination by the second decoding unit 300 will then be described.

Information on coded frames input into the first decoding unit 200 is inverse-quantized and changed to transformation coefficients by the inverse-quantization unit 210. The transformation coefficients are inverse-spatially transformed by the inverse-spatial transformation unit 220. Inverse-spatial transformation is involved in spatial transformation of coded frames. When the wavelet transformation is used in the spatial transformation manner, the inverse-spatial transformation performs inverse-wavelet transformation. When the spatial transformation is used in the DCT transformation manner, inverse-DCT transformation is performed. The transformation coefficients are changed to "I" frames and "H" frames temporally filtered through the inverse-spatial transformation. For inverse-temporal transformation, the inverse-temporal filtering unit 230 uses motion vectors obtained by interpreting the bit-stream.

Information on coded frames input into the second decoding unit 300 is inverse-quantized and changed to transformation coefficients by the inverse-quantization unit 310. The transformation coefficients are inverse-temporally transformed by the inverse-temporal transformation unit 320. The motions vectors and the constrained temporal level sequence for inverse-temporal transformation may be obtained from information obtained by allowing the bit-stream interpretation unit 100 to interpret. Coded image information through inverse-temporal transformation is changed to frames having passed through spatial transformation. The frames in the state of having passed through the spatial transformation are inverse-spatially changed in the inverse-spatial transformation unit 330 and restored to the frames constituting the video sequence. The inverse-spatial transformation used in the inverse-spatial transformation unit 330 is inverse-wavelet transformation.

According to the exemplary embodiments of the present invention, video coding whereby an encoder-side can have temporal scalability is available. In addition, all the frames of a GOP can be transmitted to a decoder side when all of them have not been operated but a part of them has been operated and the decoder side can start to decode the partial frames transmitted, thereby reducing the delay time.

Those who have common knowledge in the art to which the present invention pertains can understand that the present invention can be carried out in other specific manners without changing the technical ideas and/or essential features thereof.

Although a few preferred embodiments have been shown and described, it will be appreciated by those skilled in the art that various changes and modifications might be made without departing from the scope of the invention, as defined in the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.  A method for video coding, the method comprising:

    (a) receiving a plurality of frames constituting a video sequence and sequentially eliminating a temporal redundancy between the plurality of frames on a Group Of Pictures (GOP) basis, starting from a frame at a highest temporal level; and
    (b) generating a bit-stream by quantizing transformation coefficients obtained from the plurality of frames whose temporal redundancy has been eliminated.

**2.** The method as claimed in claim 1, wherein with respect to frames at a same temporal level in step (a), the temporal redundancy thereof is sequentially eliminated from a frame having a lowest frame index to a frame having a highest frame index.

**3.** The method as claimed in claim 1 or claim 2, wherein, among the frames constituting a GOP, the frame at the highest temporal level is a frame having a lowest frame index in the GOP.

**4.** The method as claimed in any preceding claim, wherein in step (a), the frame at the highest temporal level is set to an A frame when a temporal redundancy between frames constituting a GOP is eliminated, the temporal redundancy between the frames of the GOP other than the A frame at the highest temporal level is eliminated in the sequence from the highest temporal level to a lowest temporal level, and is eliminated in the sequence from a lowest frame index to a highest frame index when the frames are at the same temporal level, where one or more frames which can be referenced by each frame in the course of eliminating the temporal redundancy have a higher index than the frames at a higher temporal level or the same temporal level.

**5.** The method as claimed in claim 4, wherein a frame is added to the frames referenced by each frame in the course of eliminating the temporal redundancy.

**6.** The method as claimed in claim 4 or claim 5, wherein one or more frames at the higher temporal level belonging to a next GOP are added to the frames referenced by each frame in the course of eliminating the temporal redundancy.

**7.** The method as claimed in any preceding claim, further comprising eliminating spatial redundancy between the plurality of frames, wherein the generated bit-stream further comprises information on a sequence of spatial redundancy elimination and temporal redundancy elimination.

**8.** A video encoder comprising:

a temporal transformation unit (10) receiving a plurality of frames and eliminating a temporal redundancy of the frames in a sequence from a highest temporal level to a lowest temporal level;
a quantization unit (30) quantizing transformation coefficients obtained after eliminating the temporal redundancy between the frames; and
a bit-stream generation unit (40) generating a bit-stream including the quantized transformation coefficients.

**9.** The video encoder as claimed in claim 8, wherein the temporal transformation unit (10) comprises a motion estimation unit (12) obtaining motion vectors from the received plurality of frames; and
a temporal filtering unit (14) performing temporal filtering relative to the received plurality of frames on a Group Of Pictures (GOP) basis by use of the motion vectors, the temporal filtering unit (14) performing the temporal filtering on the GOP basis in the sequence from the highest to the lowest temporal level or from a lowest frame index to a highest frame index at a same temporal level, and by referencing original frames of the frames having already been temporally filtered.

**10.** The video encoder as claimed in claim 9, wherein each of the plurality of frames is referenced when eliminating a temporal redundancy between the frames.

**11.** The video encoder as claimed in any one of claims 8 to 10, further comprising a spatial transformation unit (20) eliminating a spatial redundancy between the plurality of frames, wherein the bit-stream generation unit (40) combines information on the sequence for eliminating temporal redundancy and a sequence for eliminating spatial redundancy to obtain the transformation coefficients and generate the bit-stream.

**12.** A method for video decoding, the method comprising:

(a) extracting information regarding encoded frames and a redundancy elimination sequence by receiving and interpreting a bit-stream;
(b) obtaining transformation coefficients by inverse-quantizing the information regarding the encoded frames; and
(c) restoring the encoded frames through an inverse-spatial transformation and an inverse-temporal transformation of the transformation coefficients to the redundancy elimination sequence.

EP 1 538 567 A2

13. The method as claimed in claim 12, wherein in step (a), information on the number of encoded frames per Group Of Pictures (GOP) is further extracted from the bit-stream.

14. A video decoder comprising:

a bit-stream interpretation unit (100) interpreting a received bit-stream to extract information regarding encoded frames therefrom and a redundancy elimination sequence;
an inverse-quantization unit (210) inverse-quantizing the information regarding the encoded frames to obtain transformation coefficients therefrom;
an inverse spatial transformation unit (220) performing an inverse-spatial transformation process; and
an inverse temporal transformation unit (230) performing an inverse-temporal transformation process,

wherein the encoded frames of the bit-stream are restored by performing the inverse-spatial transformation process and the inverse-temporal transformation process on the transformation coefficients to the redundancy elimination sequence of the encoded frames by referencing the redundancy elimination sequence.

15. A storage medium having recorded thereon a program readable by a computer to execute a video coding method, said method comprising:

(a) receiving a plurality of frames constituting a video sequence and sequentially eliminating a temporal redundancy between the plurality of frames on a Group Of Pictures (GOP) basis, starting from a frame at a highest temporal level; and
(b) generating a bit-stream by quantizing transformation coefficients obtained from the plurality of frames whose temporal redundancy has been eliminated.

16. The storage medium of claim 15, wherein with respect to frames at a same temporal level in step (a), the temporal redundancy thereof is sequentially eliminated from a frame having a lowest frame index to a frame having a highest frame index.

17. The storage medium of claim 15 or claim 16, wherein, among the frames constituting a GOP, the frame at the highest temporal level is a frame having a lowest frame index in the GOP.

18. The storage medium of any one of claims 15 to 17, wherein in step (a), the frame at the highest temporal level is set to an A frame when a temporal redundancy between frames constituting a GOP is eliminated, the temporal redundancy between the frames of the GOP other than the A frame at the highest temporal level is eliminated in the sequence from the highest temporal level to a lowest temporal level, and is eliminated in the sequence from a lowest frame index to a highest frame index when the frames are at the same temporal level, where one or more frames which can be referenced by each frame in the course of eliminating the temporal redundancy have a higher index than the frames at a higher temporal level or the same temporal level.

19. The storage medium of claim 18, wherein a frame is added to the frames referenced by each frame in the course of eliminating the temporal redundancy.

20. The storage medium of claim 18 or claim 19, wherein one or more frames at the higher temporal level belonging to a next GOP are added to the frames referenced by each frame in the course of eliminating the temporal redundancy.

21. The storage medium of any one of claims 18 to 20, said method further comprising eliminating spatial redundancy between the plurality of frames, wherein the generated bit-stream further comprises information on a sequence of spatial redundancy elimination and temporal redundancy elimination.

22. A storage medium having recorded thereon a program readable by a computer to execute a video decoding method, said method comprising:

(a) extracting information regarding encoded frames and a redundancy elimination sequence by receiving and interpreting a bit-stream;
(b) obtaining transformation coefficients by inverse-quantizing the information regarding the encoded frames; and

16

(c) restoring the encoded frames through an inverse-spatial transformation and an inverse-temporal transformation of the transformation coefficients to the redundancy elimination sequence.

23. The storage medium of claim 22, wherein in step (a), information on the number of encoded frames per Group Of Pictures (GOP) is further extracted from the bit-stream.

# FIG. 1

**CODING SEQUENCE**

**TEMPORAL LEVEL**

**FRAME INDEX** 0 1 2 3 4 5 6 7

**DECODING SEQUENCE**

**TEMPORAL LEVEL**

# FIG. 2

# FIG. 3

**CODING SEQUENCE**  **TEMPORAL LEVEL**

**FRAME INDEX** 0  1  2  3  4  5  6  7

**DECODING SEQUENCE**  **TEMPORAL LEVEL**

# FIG. 4

CODING SEQUENCE

TEMPORAL LEVEL

3

2

1

FRAME INDEX 0  1  2  3  4  5  6  7

DECODING SEQUENCE

TEMPORAL LEVEL

3

2

1

FIG. 5

TEMPORAL LEVEL

4

3

2

1

FRAME INDEX 0    1    2    3    4    5    6    7

FIG. 6

TEMPORAL LEVEL

4

3

2

1

FRAME INDEX 0   1   2   3   4   5   6   7

# FIG. 7

# FIG. 8

BIDIRECTINALLY PREDICTED MACROBLOCK OR
WEIGHTED REDICTED MACROBLOCK

FORWARDLY PREDICTED
MACROBLOCK

③

①

②

④

BACKWARDLY PREDICTED
MACROBLOCK

FRAME n-1

FRAME n

FRAME n+1

INTRA-PREDICTED MACROBLOCK

EP 1 538 567 A2

FIG. 9

**GOP BOUNDARY**

# FIG. 10

A FRAME

I=100%

A FRAME

BI=87% / I=12%

F=17% / I=71%

F=78% / BI=17%

B=34% / I=53%

B=94%

B=43% / I=48%

EP 1 538 567 A2

# FIG. 11

A FRAME

F=26% / BI=52

B=19% / BI=71%

B=23% / BI=58%

A FRAME

F=16% / BI=70%

B=21% / BI=73%

B=17% / BI=68%

B=12% / BI=79%

EP 1 538 567 A2

# FIG. 12

VIDEO SEQUENCE → MOTION ESTIMATION UNIT (10, 12)

MOTION VECTOR, REFERENCE FRAME NUMBER

TEMPORAL FILTERING UNIT (14)

MOTION VECTOR, REFERENCE FRAME NUMBER → BIT-STREAM GENRATION UNIT (40) → BIT-STREAM

SPATIAL TRANSFORMATION UNIT (20)

FRAMES TEMPORALLY FILTERED

TRANSFORMATION COEFFICIENT

QUANTIZATION UNIT (30)

EP 1 538 567 A2

# FIG. 13

EP 1 538 567 A2

# FIG. 14

EP 1 538 567 A2